# EUROPEAN PATENT APPLICATION

(11) **EP 4 846 826 A1**
(43) Date of publication of application: **02.12.2026**
(21) Application number: 26178146.2
(22) Date of filing: 12.05.2026
(51) Int. Cl.: A01B 79/00

(54) **WORKED AREA MAPPING**

(30) Priority: 29.05.2025 GB 202508356
(71) Applicant: AGCO International GmbH, 8212 Neuhausen am Rheinfall (CH)
(72) Inventor: Maurer, Joerg, 87616 Marktoberdorf (DE); Lind, Niklas, 87616 Marktoberdorf (DE); Michaelis, Christopher, 87616 Marktoberdorf (DE); Dischler, Emilian, 87616 Marktoberdorf (DE); Fromligt, Nico, 87616 Marktoberdorf (DE)
(74) Representative: AGCO Intellectual Property Department

(57) **Abstract**

A mechanism for generating a map of worked and non-worked areas within a predetermined agricultural region (e.g., a field) responsive to feedback data for monitoring an operation of an implement of an agricultural vehicle, and preferably responsive to triggers related to the working height of an implement, the power take-off speed of an implement, or the actuation of a valve related to an implement.

## Description

### CROSS-REFERENCE TO RELATED APPLICATIONS

### FIELD

Embodiments of the present disclosure relate to mapping a predetermined agricultural region, and in particular to generating a map of worked and non-worked areas within a predetermined agricultural region.

### BACKGROUND

A map of worked and non-worked areas in a predetermined agricultural region (e.g., a field) enables tracking of coverage, prevents overlap and missed sections, and can be subsequently used to optimize agricultural operations (e.g., seeding, fertilizing) while increasing fuel and time efficiency. Current methods of tracking which areas of a field have been worked or not are manual or, if automated, basic. For example, it is known in the prior art to automate the generation of a map of worked areas in a field by automatically marking the start of a worked area as soon as a user presses the button to control an agricultural implement even though this is often not the start of when the implement actually starts to work the field, and thus the map is not generated as accurately as it could be.

### BRIEF SUMMARY

According to examples in accordance with this disclosure, there is provided an agricultural vehicle system comprising an agricultural vehicle and a computing system. The computing system comprises at least one processor; and at least one non-transitory computer-readable storage medium storing instructions thereon that, when executed by the at least one processor, cause the computing system to: generate a map of a predetermined agricultural region indicating a worked area and a non-worked area responsive to feedback data for monitoring an operation of an implement of the agricultural vehicle.

The computing system may be adapted to perform the acts of any herein proposed method, and vice versa.

The present disclosure thereby provides a mechanism for more accurately generating a map of worked and non-worked areas in a predetermined agricultural region by using feedback data (e.g., more reliable triggers) related to the actual working of agricultural implements rather than, for example, basing the classification merely on instructions to begin using one or more implements (e.g., input data). In this way, a more accurate and reliable map of worked areas within a predetermined agricultural region can be built, thereby facilitating more efficient and effective subsequent agricultural operations within said predetermined agricultural region.

In some examples, a transition from non-worked area to worked area or vice versa is responsive to at least one of the following feedback triggers: a working height of a first implement of the agricultural vehicle crossing a first predetermined threshold; a power take-off speed at which the agricultural vehicle is powering a second implement crossing a second predetermined threshold; and/or actuation of a valve corresponding to a third implement of the agricultural vehicle, the transition delayed according to a predetermined time delay. These are all triggers which allow the accurate determination of whether an implement has actually began working the agricultural region or not, relying on feedback from the agricultural vehicle rather than merely relying on user input, for example. The predetermined time delay accounts for the fact that some implements may not start working as soon as a related valve is actuated but rather after a certain amount of time has passed.

In some examples, the agricultural vehicle further comprises at least one sensor configured to measure at least one of: the working height of the first implement; the power take-off speed powering the second implement; and/or the actuation of the valve. The use of a sensor facilitates accurate determination of each of these parameters as well as retrofitting agricultural vehicles to enable the present disclosure if they do not already have built-in sensors suitable for these purposes.

In some examples, the first implement is a front or rear hitch. The height of a front or rear hitch can directly determine whether the agricultural vehicle is working the agricultural region or not and thus this results in a particularly reliable feedback trigger.

In some examples, the second implement is a tiller, baler, mower, harvester, or sprayer. These are all implements which the power take-off (PTO) speed thereof can be used to determine whether the implement is working the agricultural region or not.

In some examples, the third implement is a hydraulic implement. This facilitates the monitoring of a valve being able to be used to determine whether the agricultural vehicle is working the agricultural region or not.

In some examples, the agricultural vehicle comprises the computing system. This allows the agricultural vehicle to build the map of the predetermined agricultural region itself, not relying on any connections to external systems.

In some examples, the computing system is a cloud-based computing system. This allows the map of the predetermined agricultural region to be built externally to the agricultural vehicle, thereby reducing the agricultural vehicle's computational load.

In some examples, the agricultural vehicle system further comprises a position monitoring device configured to monitor a position of the agricultural vehicle within the predetermined agricultural region; and generating the map of the predetermined agricultural region is further responsive to the position of the agricultural vehicle. The use of a position monitoring device allows the moment one of the feedback triggers is triggered, for example, to be used to accurately record the position of the transition from worked to non-worked area.

There is also provided a method for generating a map of worked and non-worked areas within a predetermined agricultural region.

The method comprises: generating, by a computing system of an agricultural vehicle system, a map of a predetermined agricultural region indicating a worked area and a non-worked area responsive to feedback data for monitoring an operation of an implement of an agricultural vehicle, wherein the agricultural vehicle system further comprises the agricultural vehicle.

In some examples, a transition from non-worked area to worked area or vice versa is responsive to at least one of the following feedback triggers: a working height of a first implement crossing a first predetermined threshold; a power take-off speed at which the agricultural vehicle is powering a second implement crossing a second predetermined threshold; and/or actuation of a valve corresponding to a third implement of the agricultural vehicle, the transition delayed according to a predetermined time delay.

In some examples, at least one of the first predetermined threshold, the second predetermined threshold, and/or the predetermined time delay is adjustable by a user. This allows the user to influence when an implement should be considered to be working the agricultural region.

In some examples, the agricultural vehicle comprises at least one sensor configured to measure at least one of: the working height of the first implement; the power take-off speed at which the first agricultural vehicle is powering the second implement; and/or the actuation of the valve.

In some examples, the predetermined time delay has a resolution of 100 ms. This facilitates fine-tuning of when the implement is considered to be working the agricultural region after actuation of the valve.

In some examples, a transition from non-worked area to worked area is responsive to at least one of the following feedback triggers: a working height of the first implement of the agricultural vehicle crossing below the first predetermined threshold; a power take-off speed at which the agricultural vehicle is powering the second implement crossing above the second predetermined threshold; and/or actuation of a valve corresponding to the working of the third implement of the agricultural vehicle, the transition delayed according to the predetermined time delay.

In some examples, a transition from worked area to non-worked area is responsive to at least one of the following feedback triggers: a working height of the first implement of the agricultural vehicle crossing above the first predetermined threshold; a power take-off speed at which the agricultural vehicle is powering the second implement crossing below the second predetermined threshold; and/or actuation of a valve corresponding to a stopping of working of the third implement of first agricultural vehicle, the transition delayed according to a predetermined time delay.

In some examples, the method further comprises monitoring, using a position monitoring device, a position of the agricultural vehicle within the predetermined agricultural region; and generating the map of the predetermined agricultural region is further responsive to the position of the agricultural vehicle.

In some examples, the position of the agricultural vehicle is defined in a predefined co-ordinate system. This provides a particularly effective system for monitoring the position of the agricultural vehicle.

In some examples, the map of the predetermined agricultural region is defined in the same predefined co-ordinate system. This facilitates efficient mapping of the boundaries of the worked and non-worked areas.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a flowchart illustrating a proposed method;
FIG. 2 is a flowchart illustrating a proposed method;
FIG. 3 is an illustration of an example GUI for a proposed method;
FIG. 4 is an illustration of an example GUI for a proposed method;
FIG. 5 is a flowchart illustrating a proposed method;
FIG. 6 illustrates a system comprising a computing system as herein proposed; and
FIG. 7 illustrates an agricultural vehicle comprising a computing system as herein proposed.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

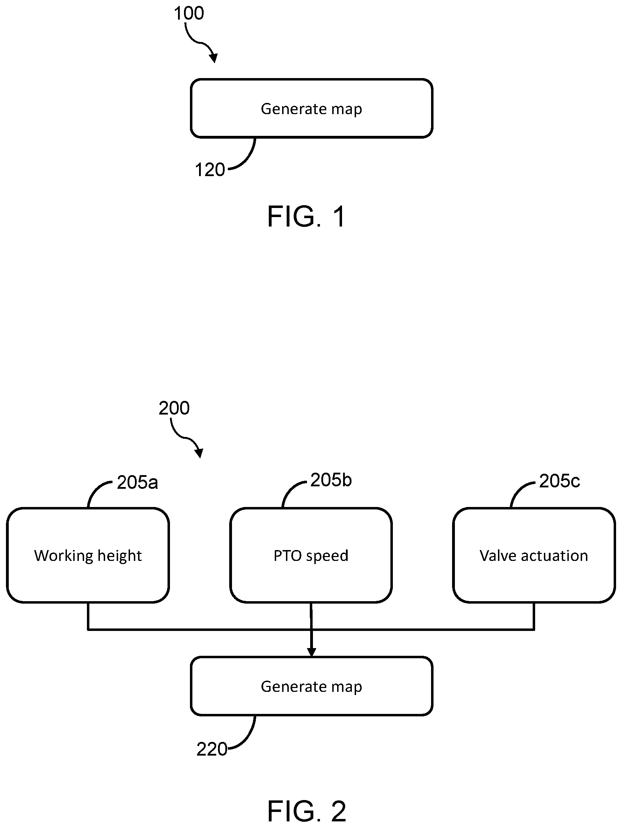

FIG. 1 is a flowchart illustrating a proposed method 100 that is executed, e.g., by a processing system, to perform the proposed approach. In particular, the method 100 is designed for generating a map of worked and non-worked areas within a predetermined agricultural region.

The method 100 comprises an act 110 of generating, by a computing system of an agricultural vehicle system, a map of a predetermined agricultural region indicating a worked area and a non-worked area. The agricultural vehicle system also comprises an agricultural vehicle in addition to the computing system (the computing system and agricultural vehicle being in communication with one another). The map is generated responsive to (i.e., based on) feedback data, wherein feedback data is data for monitoring an operation of an implement of the agricultural vehicle (i.e., data from which the actual operation/state of an implement can be determined and not merely, for example, user input which instead is related to a desired operation/state of an implement). An agricultural vehicle is to be understood as any ground-based machine configured to perform farming/agricultural operations, such as a tractor, combine, sprayer, harvester, seeder, etc. The predetermined agricultural region is to be understood as a region within which agricultural vehicles operate, for example, a field, a group of fields, or a defined area of farmland, etc.

The method 100 thus provides a method which facilitates a more accurate map of worked and non-worked areas within a predetermined agricultural region being generated as the map is based on an actual operation/state of an implement of the agricultural vehicle, i.e., based on feedback from the machine as to its current state/operation, and thus the moment the agricultural vehicle actually begins working the field can be more accurately recorded. This is in contrast to methods in the prior art which rely merely on user input to mark the transitions between worked and non-worked areas, e.g., a user manually marking the boundaries of the areas or using the moment a user inputs instructions (e.g., presses a button) to begin or stop using an implement (e.g., pressing a button to start lowering a hitch) which does not exactly correlate to when the implement actually begins or stops working the area. Of course, the skilled person would appreciate that the agricultural vehicle's absolute/relative position within the predetermined agricultural region also needs to be taken into account in combination with the feedback data in order to locate the points of transition in the map of the predetermined agricultural region - the skilled person would be aware of the myriad ways in which this could be facilitated.

In this embodiment, the agricultural vehicle comprises the computing system. In other words, in this embodiment, the agricultural vehicle system is the agricultural vehicle, and the agricultural vehicle comprises the computing system which generates the map of the predetermined agricultural area. In other embodiments, however, the computing system can be a cloud-based computing system (e.g., a remote server infrastructure providing processing and storage resources accessible via a network connection) not part of the agricultural vehicle though in communication with it (thus together forming the agricultural vehicle system).

A map of the predetermined agricultural region indicating a worked area and a non-worked area (i.e., at least one worked area and at least one non-worked area) can be understood as a map of the predetermined agricultural region (e.g., a field) which indicates one or more worked areas and one or more non-worked areas (defined by boundaries) within the predetermined agricultural region, with the boundaries of the areas (i.e., the transitions between the worked and non-worked areas) being based on / responsive to feedback data which indicates an actual operation / current state of at least one implement of the agricultural vehicle (though the transition may be delayed relative to a monitored operation of an implement, i.e., to account for the time it takes for the required volume of fluid to pass through an open valve). An implement of an agricultural vehicle can be understood as any device or apparatus that is attachable to or integrated with the vehicle for the purpose of performing specific agricultural functions, such as plowing, seeding, harvesting, soil treatment, or attaching further implements. The implement may be powered mechanically, hydraulically, or electrically via the vehicle's drive or auxiliary systems and may include control systems enabling automatic or semi-automatic operation. An implement can otherwise be referred to as a piece of equipment, instrument, or apparatus.

In summary, the disclosure facilitates a computing system (e.g., in a tractor or cloud-based) mapping a worked area (e.g., tilled area) of a field for future reference. At least some of the boundaries of the worked area (e.g., when entering and leaving a headland) are determined based on when an implement of an agricultural vehicle is lifted, lowered, and/or powered. With this disclosure, the improvement comes in having threshold levels associated with each of the foregoing. For example, 1) when the implement is lifted to a certain threshold height, a boundary (e.g., an end) of the work area is identified, 2) when the implement is lowered to a certain threshold height, a boundary (e.g., a beginning) of the work area is identified, 3) when a power-take off (PTO) powering the implement crosses a certain threshold RPM either the beginning or end of the worked area is identified, 4) when a time has elapsed after actuating a valve either the beginning or end of the worked area is identified. These thresholds may also be adjustable by a user such that they can influence when the agricultural vehicle should be considered to actually be working the field.

FIG. 2 is a flowchart illustrating a proposed method 200 that is executed, e.g., by a processing system, to perform the proposed approach. In particular, the method 200 is designed for generating a map of worked and non-worked areas within a predetermined agricultural region.

Act 220 is substantially the same as act 120 of method 100 though in this embodiment, the transition from non-worked area to worked area or vice versa is responsive to (i.e., based on) at least one of the following feedback triggers. Feedback trigger 205a: a working height of a first implement of the agricultural vehicle crossing a first predetermined threshold. Feedback trigger 205b: a power take-off speed at which the agricultural vehicle is powering a second implement crossing a second predetermined threshold. Feedback trigger 205c: actuation of a valve corresponding to a third implement of the agricultural vehicle, the transition (between worked and non-worked areas) delayed according to a predetermined time delay. It should be noted that the first and second predetermined threshold may take the form of absolute values or percentages (e.g., of minimum and maximum values). Preferably, the second predetermined threshold is at least 100 rpms. The predetermined time delay may take the form of seconds or milliseconds and is preferably between 0 and 60 seconds long. It should also be noted that if a second valve is actuated which cancels out the function of a first valve while the time delay for the first valve is still active, then the first valve feedback trigger will be cancelled and overwritten by the second valve feedback trigger.

In other words, in this embodiment, determining whether at least one of the triggers has been met is based on / responsive to the feedback data. Of course, the feedback data thus needs to comprise data which facilitates the assessment of whether at least one of the triggers has been met or not, i.e., facilitates the monitoring of the operation of at least one of the first implement, second implement, and/or third implement. That is, the method 200 can be considered to include an act of determining whether at least one of the feedback triggers has been met or not responsive to the feedback data for monitoring an operation of the corresponding implement of the agricultural vehicle. To be clear, in this embodiment, only one of the feedback triggers needs to be met/triggered to record a transition from non-worked area to worked area on the map, and in any given embodiment, only one of the triggers may be being monitored (e.g., according to the implement(s) present in the agricultural vehicle). It should also be noted that in some embodiments, to trigger a transition, two or more of the feedback triggers may need to be met in combination, for instance, the first implement being lower than the first predetermined threshold while the second implement (which may be part of the first implement) is being powered with a PTO speed above the second predetermined threshold.

Act 220 could thus alternatively be understood as generating a map of a predetermined agricultural region indicating a worked area and a non-worked area, wherein a transition from non-worked area to worked area or vice versa is responsive to at least one of the following triggers: a working height of a first implement of the agricultural vehicle crossing a first predetermined threshold; a power take-off speed at which the agricultural vehicle is powering a second implement crossing a second predetermined threshold; and/or actuation of a valve corresponding to a third implement of the agricultural vehicle, the transition delayed according to a predetermined time delay.

In this embodiment, at least one of the first predetermined threshold, the second predetermined threshold, and/or the predetermined time delay is adjustable/configurable by a user. This allows the user to influence when an implement should be considered to be working the agricultural region, though this is not essential to the working of the invention. For instance, the time delay between the actuation of a valve and the actual working of an implement may be a fixed time and thus allowing a user to set this time delay would serve little purpose. In this embodiment, the predetermined time delay has a resolution of 100 ms - this facilitates fine-tuning of when the implement is considered to be working the agricultural region after actuation of the valve. The use of the predetermined time delay can be thought of as a pseudo-feedback measure, as rather than, for example, measuring when a cylinder has been filled by the opening of a valve, an assumed time to fill the cylinder after the opening of the valve can be used such that the transition from worked to non-worked area (or vice versa) occurs at a more accurate time. Confirmation that the valve has been opened to begin the predetermined time delay can still be considered feedback data, however.

In this embodiment, the first implement is a front or rear hitch. The height of a front or rear hitch can directly determine whether the agricultural vehicle is working the agricultural region or not and thus this results in a particularly reliable feedback trigger. As the skilled person would know, front and rear hitches are mechanical interface assemblies mounted respectively at the front and rear ends of an agricultural vehicle, such as a tractor, designed to enable the attachment and secure coupling of additional implements.

In this embodiment, the second implement is a tiller, baler, mower, harvester, or sprayer. These are all implements which the power take-off (PTO) speed thereof can be used to determine whether the implement is working the agricultural region or not.

In this embodiment, the third implement is a hydraulic implement. This facilitates monitoring a valve to determine whether the agricultural vehicle is working the agricultural region or not as a hydraulic implement's function is typically controlled by one or more valves.

In some embodiments, the first implement comprises the second implement and/or the third implement. For instance, the second and/or third implements may be attached to a front or rear hitch, and in some embodiments, the triggers for each of the first and second/third implements may be needed to be met to trigger the transition from worked to non-worked area or vice versa.

In this embodiment, the agricultural vehicle comprises at least one sensor configured to measure at least one of (e.g., one sensor for each feedback trigger): the working height of the first implement (e.g., using a distance sensor to measure the distance from the first implement to the ground); the power take-off (PTO) speed powering the second implement (e.g., using a rev per minute sensor); and/or the actuation of a valve (e.g., using a position sensor). In other words, the agricultural vehicle may comprise at least one sensor to obtain feedback data. The skilled person would be aware of the many ways in which this could be facilitated.

Specifically, in this embodiment, the transition from non-worked area to worked area is responsive to at least one of the following feedback triggers: a working height of the first implement of the agricultural vehicle crossing below the first predetermined threshold (e.g., indicating the implement is now low enough to interact with the agricultural region, e.g., is in 'control mode'); a power take-off speed at which the agricultural vehicle is powering the second implement crossing above the second predetermined threshold (e.g., indicating the implement is now sufficiently powered); and/or actuation of a valve corresponding to the working of the third implement of the agricultural vehicle, the transition delayed according to the predetermined time delay (e.g., indicating the implement is now sufficiently working / in action).

Accordingly, in this embodiment, the transition from worked area to non-worked area is responsive to at least one of the following feedback triggers: a working height of the first implement of the agricultural vehicle crossing above the first predetermined threshold (e.g., indicating the implement is now high enough to no longer interact with the agricultural region, e.g., is in 'transport mode'); a power take-off speed at which the agricultural vehicle is powering the second implement crossing below the second predetermined threshold; and/or actuation of a valve corresponding to a stopping of working of the third implement of first agricultural vehicle, the transition delayed according to a predetermined time delay.

It should be noted that in some embodiments, the first predetermined threshold for triggering the transition from non-worked area to worked area due to the lowering of the first implement is different to the first predetermined threshold for triggering the transition from worked area to non-worked area due to the raising of the first implement. For instance, to trigger the transition from non-worked area to worked area, the first implement may have to be lowered 75% of its maximum extent but to trigger the transition from worked area to non-worked area, the first implement may have to be raised 50% of its maximum extent. This may allow for flexibility in maneuvering the first implement while travelling without unintentionally triggering a transition. In this situation, the first predetermined thresholds may thus have different labels, e.g., first lowering predetermined threshold and first raising predetermined threshold.

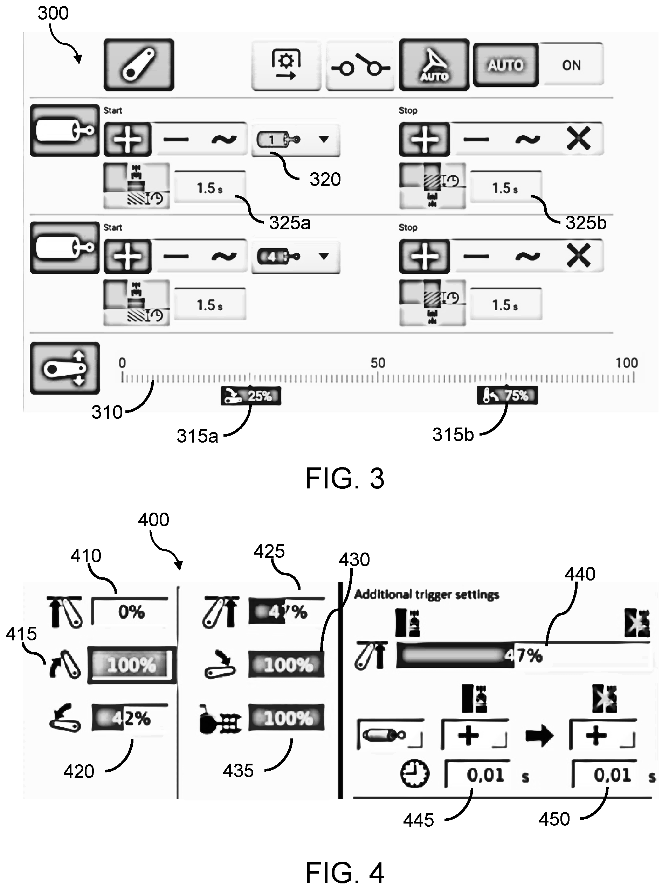

FIG. 3 is an illustration of an example graphical user interface (GUI) 300 for a proposed method (e.g., method 200). In this example, the GUI 300 allows a user to adjust the thresholds for the first implement, e.g., the working height trigger of the rear hitch which triggers the transition from non-worked to worked area and the working height trigger of the rear hitch which triggers the transition from worked area to non-worked area. For instance, a scale 310 is provided to represent the total extent of the working height of the rear hitch from 0% (on the ground) to 100% (raised all the way). On this scale, a user can set the raising 315b and lowering 315a triggers to their preferred percentages, for example, in this case, 25% for the lowering trigger 315a (to trigger the transition from non-worked to worked area) and 75% for the raising trigger 315b (to trigger the transition from worked to non-worked area).

The UI 300 also allows the adjusting of a time delay 325a from actuation of a selected valve 320 to trigger the transition from non-worked area to worked area as well as a time delay 325b from actuation of the same selected valve 320 to trigger the transition from worked area to non-worked area. Thus, in this example, a user can also select which valve(s) (using a drop-down menu, for instance) the actuation thereof should trigger a transition (after an adjustable time delay) between worked and non-worked areas and vice versa. It should be noted that in some embodiments, the described elements of the UI may be greyed out, i.e., non-interactable, such that a user cannot adjust the above-described parameters but rather can only observe automated settings.

FIG. 4 is an illustration of another example GUI 400 for a proposed method (e.g., method 200). In this example, element 410 facilitates a user adjusting a height limitation of the front hitch; element 415 facilitates a user adjusting a lifting speed of the front hitch; element 420 facilitates a user adjusting a lowering speed of the front hitch; element 425 facilitates a user adjusting a height limitation of the rear hitch; element 430 facilitates a user adjusting a lowering speed of the rear hitch; and element 435 facilitates a user adjusting control settings for the rear hitch.

More importantly, element 440 facilitates a user adjusting a predetermined threshold for a single trigger for the working height of the rear hitch, regardless of whether it is being raised or lowered. For example, this is equivalent to if thresholds 315a and 315b of FIG. 3 were set to the same value. Elements 445 and 450 correspond to elements 325a and 325b of FIG. 3 respectively. In other words, elements 445 and 450 facilitate a user adjusting time delays from actuation of a valve to trigger the transition from non-worked area to worked area or vice versa respectively.

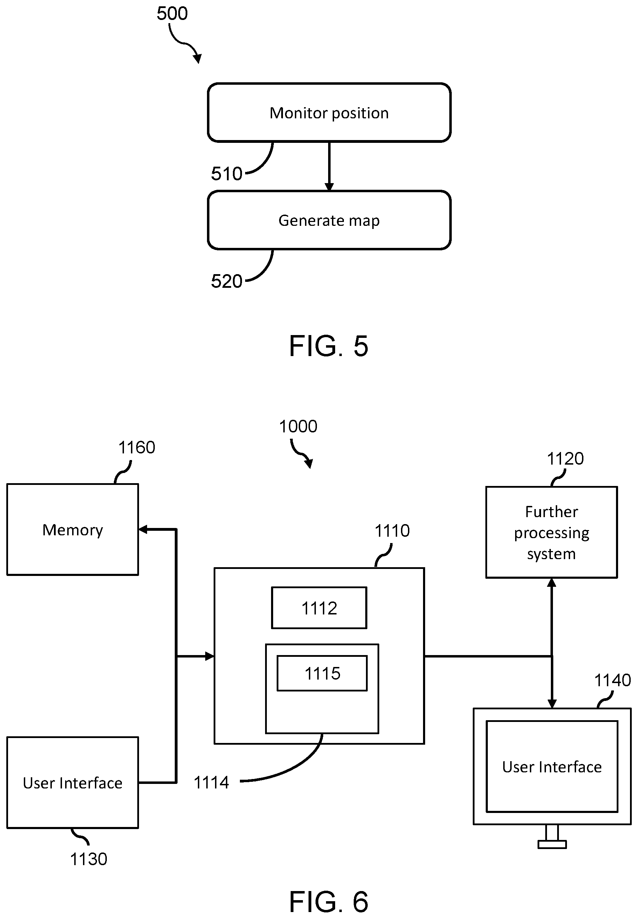

FIG. 5 is a flowchart illustrating a proposed method 300 that is executed, e.g., by a processing system, to perform the proposed approach. In particular, the method 500 is designed for generating a map of worked areas and non-worked areas within a predetermined agricultural region.

Act 510 comprises monitoring, using a position monitoring device, a position of the agricultural vehicle within the predetermined agricultural region. Act 520 is substantially the same as act 120 of method 100 though, in this embodiment, generating the map is further responsive to (i.e., based on) the position of the agricultural vehicle. The use of a position monitoring device allows the moment one of the feedback triggers is triggered, for example, to be used to accurately record the position of the transition from worked to non-worked area on the map.

Both the map of the predetermined agricultural region and the position of the agricultural vehicle within the predetermined agricultural region may be defined with respect to a predetermined spatial co-ordinate system, such as a global or geographic co-ordinate system (e.g., longitude and latitude), a region/local co-ordinate system (e.g., a trilaterated/triangulated position) or a relative co-ordinate system, such as one defined with respect to a boundary of the predetermined agricultural region.

Act 510 may be performed by the computing system communicating or otherwise interacting with the position monitoring device to monitor the position of the agricultural vehicle.

Approaches for monitoring or tracking the position of an agricultural vehicle are widely known in the art, and typically track a positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system. Alternatively, for example, the positioning of the agricultural vehicle may be tracked via an external camera directed towards the agricultural vehicle within the predetermined agricultural region (e.g., on a drone).

The monitored/tracked position of the agricultural vehicle may be defined in the same spatial co-ordinate system as the map of the predetermined agricultural region. Where appropriate or required, this may comprise performing a spatial transformation of the monitored/tracked position and/or the map so that both sets of data lie in a same spatial co-ordinate system, i.e., share a same spatial co-ordinate system. Approaches for performing such a technique are well known in the art, particularly as the relationship between different spatial co-ordinate systems can be readily defined.

Put another way, the position monitoring device may be configured to define a position of the agricultural vehicle within a predefined co-ordinate system, and the generated map of the predetermined agricultural region may also be configured according to the predefined co-ordinate system.

FIG. 6 illustrates an example of a system 1000 in which embodiments may be employed.

The system comprises a computing system 1110, which is itself an embodiment of the disclosure, an (optional) position monitoring device 1120, an (optional) input user interface 1130, and an (optional) output user interface 1140.

The computing system 1110 is configured to perform and/or co-ordinate the performance of any previously disclosed act that is identified as being performed by or using a computing system.

In particular examples, the computing system 1110 may perform the act of: generating a map of a predetermined agricultural region indicating a worked area and a non-worked area responsive to feedback data for monitoring an operation of an implement of the agricultural vehicle.

More specifically, the computing system 1110 may comprise at least one processor 1112 and at least one non-transitory computer-readable storage medium 1114 storing instructions 1115 thereon that, when executed by the at least one processor, cause the computing system to perform any previously disclosed act that is identified as being performed by or using the computing system.

The skilled person would be readily capable of developing a computing system for carrying out any herein described method. Thus, each act of the flow chart may represent a different action performed by a computing system and may be performed by a respective module of the computing system.

The position monitoring device 1120 may be configured to monitor the position of an agricultural vehicle within a predetermined agricultural region. Approaches for monitoring the position of a vehicle are well known in the art, some of which have been previously described in detail. The function or operation of the position monitoring system may be controlled by and/or responsive to instructions/communications from the computing system.

The computing system 1110 and the position monitoring device 1120 are configured to communicate with one another over any wired/wireless medium, e.g., an ethernet cable, using any suitable or known communication protocol.

The input user interface 1130 may be adapted to receive one or more inputs from a user or operator. The input(s) may, for instance, be used to indicate at least one of the first predetermined threshold, the second predetermined threshold, and/or the predetermined time delay.

The output user interface 1140 may be adapted to provide a visual representation of the map of the predetermined agricultural region. In particular, the computing system 1110 may communicate with the output user interface (e.g., embodiable as a screen or display) to provide such a visual representation.

The system 1000 may further comprise a memory 1160 configured to store one or more instances of the generated map of the predetermined agricultural region. The computing system may be configured to obtain said map from the memory 1160 (e.g., in order to update it).

There is also provided an agricultural vehicle comprising any herein disclosed computing system 1110 and (where appropriate) the position monitoring device 1120, input user interface 1130 and output user interface 1140. Additionally, the agricultural vehicle may optionally comprise at least one sensor (for obtaining feedback data) as previously described.

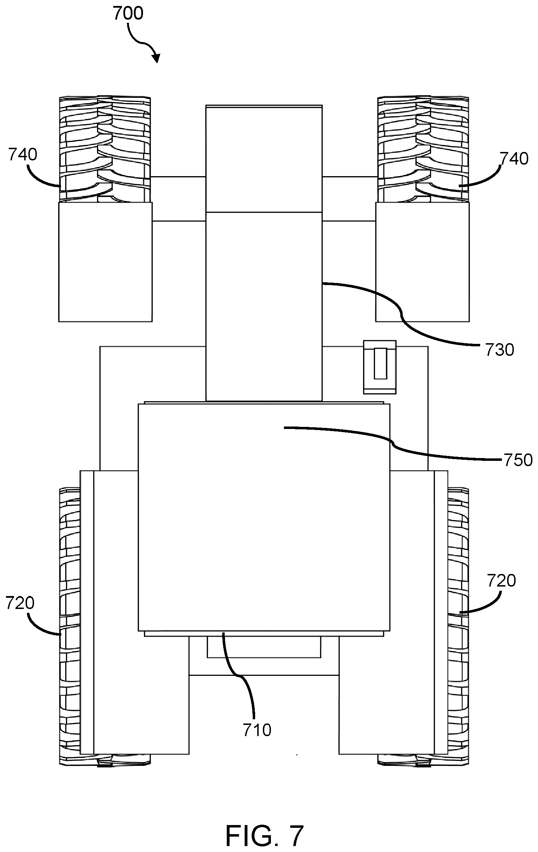

FIG. 7 illustrates an agricultural vehicle 700 comprising a computing system 750 as herein proposed.

For example, the agricultural vehicle 700 comprises a cabin 710; rear wheels 720; a hood 730; and front wheels 740. In this example, the computing system 750 (not shown) is situated in the cabin 710, but in other embodiments, the computing system 750 can be situated in any suitable place within the agricultural vehicle. In some embodiments, where appropriate, the agricultural vehicle 700 may further comprise a position monitoring device (as described above). For example, the position monitoring device may also be situated in the cabin 710.

The computing system 750 may comprise at least one processor (not shown); and at least one non-transitory computer-readable storage medium (not shown) storing instructions thereon that, when executed by the at least one processor, cause the computing system 750 to perform any herein-disclosed method.

In particular examples, the computing system 750 may perform the act of: generating a map of a predetermined agricultural region indicating a worked area and a non-worked area responsive to feedback data for monitoring an operation of an implement of the agricultural vehicle.

It will be understood that disclosed methods are preferably computer-implemented methods. As such, there is also proposed the concept of a computer program comprising code means for implementing any described method when said program is run on a computing system, such as a computer. Thus, different portions, lines or blocks of code of a computer program according to an embodiment may be executed by a computing system or computer to perform any herein described method.

A computer program may be stored on a computer-readable medium, itself an embodiment of the disclosure. A "computer-readable medium" is any suitable mechanism or format that can store a program for later processing by a computing system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. An agricultural vehicle system, comprising:
an agricultural vehicle; and
a computing system comprising:
at least one processor; and
at least one non-transitory computer-readable storage medium storing instructions thereon that, when executed by the at least one processor, cause the computing system to:
generate a map of a predetermined agricultural region indicating a worked area and a non-worked area responsive to feedback data for monitoring an operation of an implement of the agricultural vehicle.

2. The agricultural vehicle system of claim 1, wherein a transition from non-worked area to worked area or vice versa is responsive to at least one of the following feedback triggers:
a working height of a first implement of the agricultural vehicle crossing a first predetermined threshold;
a power take-off speed at which the agricultural vehicle is powering a second implement crossing a second predetermined threshold; and/or
actuation of a valve corresponding to a third implement of the agricultural vehicle, the transition delayed according to a predetermined time delay.

3. The agricultural vehicle system of claim 2, wherein the agricultural vehicle further comprises at least one sensor configured to measure at least one of: the working height of the first implement; the power take-off speed powering the second implement; and/or the actuation of the valve.

4. The agricultural vehicle system of claim 2 or 3, wherein the first implement is a front or rear hitch.

5. The agricultural vehicle system of any one of claims 2 to 4, wherein the second implement is a tiller, baler, mower, harvester, or sprayer.

6. The agricultural vehicle system of any one of claims 2 to 5, wherein the third implement is a hydraulic implement.

7. The agricultural vehicle system of any one of claims 2 to 6, wherein the first implement comprises the second implement and/or the third implement.

8. The agricultural vehicle system of any one of claims 1 to 7, wherein the agricultural vehicle comprises the computing system.

9. The agricultural vehicle system of any one of claims 1 to 7, wherein the computing system is a cloud-based computing system.

10. The agricultural vehicle system of any one of claims 1 to 9, further comprising a posiGon monitoring device configured to monitor a posiGon of the agricultural vehicle within the predetermined agricultural region; wherein generaGng the map of the predetermined agricultural region is further responsive to the posiGon of the agricultural vehicle.

11. A method for generating a map of worked and non-worked areas within a predetermined agricultural region, the method comprising:
generating, by a computing system of an agricultural vehicle system, a map of a predetermined agricultural region indicating a worked area and a non-worked area responsive to feedback data for monitoring an operation of an implement of an agricultural vehicle, wherein the agricultural vehicle system further comprises the agricultural vehicle.

12. The method of claim 11, wherein a transition from non-worked area to worked area or vice versa is responsive to at least one of the following feedback triggers:
a working height of a first implement crossing a first predetermined threshold;
a power take-off speed at which the agricultural vehicle is powering a second implement crossing a second predetermined threshold; and/or
actuation of a valve corresponding to a third implement of the agricultural vehicle, the transition delayed according to a predetermined time delay

13. The method of claim 12, wherein at least one of the first predetermined threshold, the second predetermined threshold, and/or the predetermined time delay is adjustable by a user.

14. The method of claim 12 or 13, wherein the agricultural vehicle comprises at least one sensor configured to measure at least one of: the working height of the first implement; the power take-off speed at which the first agricultural vehicle is powering the second implement; and/or the actuation of the valve.

15. The method of any one of claims 12 to 14, wherein the predetermined time delay has a resolution of 100 ms.
